# EUROPEAN PATENT APPLICATION

(11) **EP 2 418 483 A1**
(43) Date of publication of application: **15.02.2012**
(21) Application number: 10008308.8
(22) Date of filing: 10.08.2010
(51) Int. Cl.: G01N 29/24, G01N 29/265, G01N 29/28

(54) **Ultrasonic inspection apparatus and method for inspection of components and a wedge and method for producing a wedge**

(71) Applicant: RWE Npower plc., Swindon SN5 6PB (GB)
(72) Inventor: Charlesworth, Christopher, WF8 3JR West Yorkshire (GB)
(74) Representative: Polypatent

(57) **Abstract**

The relates to an ultrasonic inspection apparatus 1 and method for inspection of components 5, like low pressure last stage blades and disc steeple serrations, comprising a probe 2 to generate and receive ultrasonic waves 4, a wedge 3 located between the probe 2 and the component 5 to be inspected, and an evaluation unit for processing the received ultrasonic waves 4, wherein a first surface of the wedge 3 is designed to match the shape of the component 5 to be inspected along a scanning path 6 of the component 5 to be inspected. The invention further relates to a wedge and a method for producing a wedge.

## Description

The invention relates to an ultrasonic inspection apparatus for inspection of components, like low pressure last stage blades and disc steeple serrations. The invention further relates to a method for inspection of components, like low pressure last stage blades and disc steeple serrations, using an ultrasonic inspection apparatus according to the invention. The invention further relates to a wedge for ultrasonic inspection of components, like low pressure last stage blades and disc steeple serrations. The invention further relates to a method for producing a wedge according to the invention.

Non-destructive material testing using ultrasonic waves for the detection of flaws in the inner of the component, like cracks, are known from the state of the art. The ultrasonic waves are produced by an ultrasonic probe and transmitted into the component via a couplant. The transmitted ultrasonic waves are reflected at the opposite surface of the component to the inspected and hence returned to the probe, which also acts as a receiver. In case of flaws in the inner of the component the ultrasonic waves are reflected at the flaws and not at the opposite bottom surface of the components. Hence, the received reflected ultrasonic waves differ from each other for both cases. The difference between both received ultrasonic waves enables an evaluation unit to determine the size, depths and type of the defect of the component to be inspected.

The probe requires a wedge to transmit the generated ultrasonic waves into the component to be inspected. A secondary function of the wedge is to refract the ultrasonic beam such that the beam enters the material at a predetermined angle, optimized for the inspection. For optimal results the wedge has to be in intimate contact with the component to be inspected. In case the surface profile of the component to be inspected is different along the scanning path the wedge is not in intimate contact with the component in all positions along the scanning path, and hence, the ultrasonic waves are not always transmitted into the component to be inspected. This problem is overcome in the state of the art by using a series of wedges, specifically shaped to discrete positions along the profile of the component to be inspected.

US 4,502,331 discloses a method and an apparatus for ultrasonic inspection of components where the ultrasonic probe is fixed to a wedge. The probe together with the fixed wedge is moved along a scanning path of the component which has to be inspected. In case the surfaces profile of the component is different along the scanning path the wedge is not always in intimate contact with the component and therefore these areas are not inspected correctly.

EP 1 610 122 A1 discloses a method and an apparatus for detecting flaws in components using a phased array probe which allows beam steer and skew, i. e. the beam can be steered in two planes. Using a phased array probe increases the area which can be inspected from a specific position at the scanning path. According to EP 1 610 122 the phased array probe is positioned in a recess of a fixing arrangement which is mounted on the component to be inspected. Hence, it is not possible to scan the component along a scanning path as the probe sits in a recess of the fixing arrangement which is coupled to the component to be inspected. Besides this, using a phased array probe is expensive.

It is an object of the present invention to provide an ultrasonic inspection apparatus and a method for inspection of components, like low pressure last stage blades and disc steeple serrations which allow inspection of the component along a scanning path, even in case the contour of the component changes along the scanning path, in an effective and cost efficient way.

The object is solved by an ultrasonic inspection apparatus for inspection of components, like low pressure last stage blades and disc steeple serrations, comprising a probe to generate and receive ultrasonic waves, a wedge located between the probe and the component to be inspected, and an evaluation unit for processing the received ultrasonic waves, wherein a first surface of the wedge is designed to match the shape of the component to be inspected along a scanning path of the component to be inspected. This has the advantage, that the wedge perfectly couples to the component along the scanning path, so that the component can be inspected by moving the probe along the scanning path without the risk that the wedge is not perfectly coupled to the component to be inspected, especially in cases where the shape of the component to be inspected continuously changes along the scanning path.

According to a preferred embodiment of the invention the ultrasonic inspection apparatus further comprises a guiding device, like a scanning arm, to move the probe along the scanning path on a second surface of the wedge. The guiding device is used to move the probe along the scanning path during the inspection of the component. The probe is moved on a second surface of the wedge which is opposite to the first surface of the wedge which is in contact with the component to be inspected. The guiding device ensures that the probe is at any time at the correct position of the scanning path and hence, allows an automatic scanning of the component to be inspected.

According to a further embodiment of the invention the shape of the second surface of the wedge is adapted along the scanning path to optimize the angle on which the beam enters the component. Because the probe moves on the wedge rather than the two moving together on a component the wedge thickness and angle can be varied to ensure the beam reaches the correct target area. This improves the coverage of the ultrasonic inspection apparatus according to the invention. The design of the second surface of the wedge ensures that the ultrasonic waves are directed in such a way to optimize the probability of ultrasonic waves being reflected off a defect and being received by the probe for analysis. This improves the sensitivity and reduces the need to perform alternative scans.

Preferably the beam angle of the generated ultrasonic waves are radial to serration grooves of the components to be inspected.

In a preferred embodiment of the invention the wedge is made from a rubberized compound or a cross-linked polystyrene microwave plastic. These materials have the advantage that they have a high rigidity whilst still be easy to process. A cross-linked polystyrene microwave plastic is for example sold by C-LEC Plastics, Inc. under the name "Rexolite".

To further improve the coupling between the first surface of the wedge and the component to be inspected a couplant is located between the first surface of the wedge and the surface of the component to be inspected.

The object is further solved by a method for inspection of components, like low pressure last stage blades and disc steeple serrations using an ultrasonic inspection apparatus according to the invention, comprising the steps of producing ultrasonic waves, directing said ultrasonic waves into the component to be inspected, receiving reflected ultrasonic waves, and producing signal indicating the received waves, wherein the wedge is stationary during the inspection of the component, while the probe is moved along a scanning path on the second surface of the wedge. Because the probe moves on the wedge rather than the two moving together on the component, the wedge thickness and angle can be varied to ensure the beam reaches the correct target area, which improves the coverage. Furthermore, the design of the wedge ensures that the ultrasonic beam trajectory is carefully directed such that it optimized the probability of ultrasonic waves being reflected off a defect and being received by the probe for analysis. This improves the sensitivity and reduces the need to perform alternative scans.

According to a preferred embodiment of the invention a scanning arm is used to move the probe along the scanning path on the second surface of the wedge. The scanning arm can be used to automatically perform an inspection of the component along the scanning path.

Preferably, a display unit is used to visualize the signals indicating the received waves. Hence, a user can see on the display unit whether a crack in the component to be inspected is detected or not.

The invention further relates to a method for producing a wedge located between a probe, for producing ultrasonic waves, and a component to be inspected during an ultrasonic inspection, wherein a first surface of the wedge is designed to match the shape of the component to be inspected along a scanning path comprising the steps of producing or using a CAD model of the component to be inspected, defining a scanning path, to cover the whole area of the component which has to be inspected, and designing a wedge with a first surface that matches the shape of the component to be inspected along the scanning path. The invention further relates to a wedge for ultrasonic inspection of components, like low pressure last stage blades and disc steeple serrations, produced according to the inventive method.

With reference to the accompanying drawing an embodiment of the present invention will now be described by way of example, in which
- Figure 1: is a perspective view of an ultrasonic inspection of a component, and sectional views of the ultrasonic inspection at different positions of the component, according to the state of the art,
- Figure 2: is a perspective view of an ultrasonic inspection apparatus according to the invention,
- Figure 3: is a perspective view of a component to be inspected with wedges according to the invention, and
- Figure 4: is a detailed view from the component to be inspected and a wedge according to figure 3.

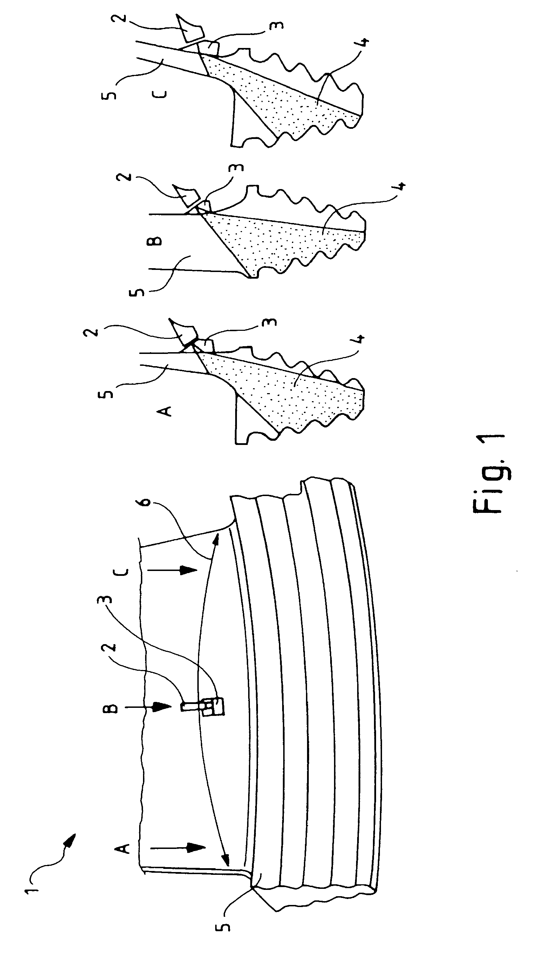

Figure 1 shows an ultrasonic inspection apparatus 1 for inspection of components 5, like low pressure last stage blades and disc steeple serrations, according to the state of the art. The ultrasonic inspection apparatus 1 comprises a probe 2 to generate and receive ultrasonic waves 4 and a wedge 3 located between the probe 2 and the component 5 to be inspected. The wedge 3 is designed to match the shape of the component 5 at a specific position. To inspect the component 5 the probe generates ultrasonic waves 4 which will be directed into the component 5 via the wedge 3. The ultrasonic waves 4 transmitted into the component 5 will be reflected at the opposite surface of the component 5 and at flaws, like cracks, inside the component 5. The reflected ultrasonic waves 4 will be received by the probe 2. From the received ultrasonic waves 4 a signal indicating the received waves 4 can be produced. These signals can be used to identify flaws, like cracks, inside the component 5.

To inspect the whole component 5 the probe 2 and the wedge 3 are moved together along a scanning path 6. As the wedge 3 is designed to match the shape of the component 5 at a specific position, for example position B of figure 1, the wedge 3 is not in intimate contact with the surface of the component 5 at all positions along the scanning path 6, for example positions A and C of figure 1. Figure 1 further shows sectional views of the ultrasonic inspections at positions A, B and C. As can be seen from the sectional views of figure 1 only at position B the whole part of the component 5 which should be inspected is covered by the ultrasonic waves 4. Due to the change of the shape of the component 5 only a part of the area to be inspected is covered by the ultrasonic waves 4 at positions A and C of figure 1.

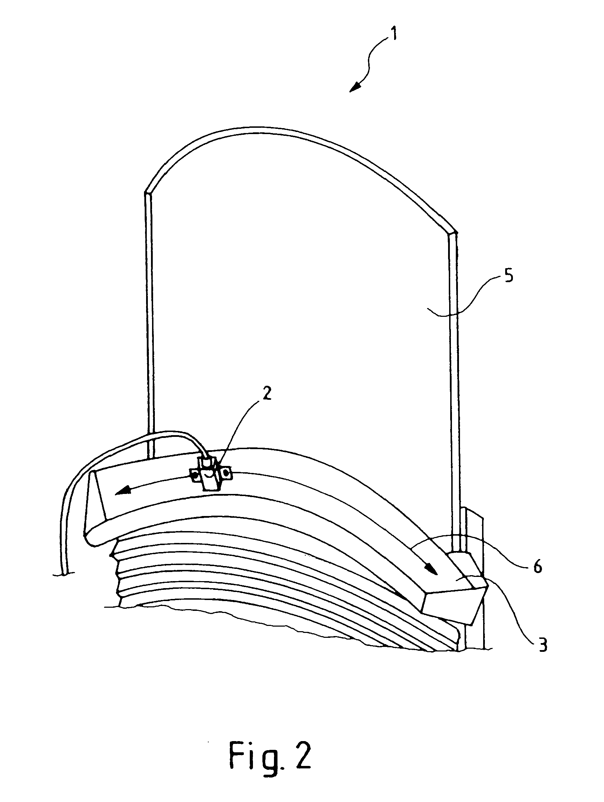

Figure 2 shows an ultrasonic inspection apparatus 1 for inspection of components 5, like low pressure last stage blades and disc steeple serrations, according to the invention. The ultrasonic inspection apparatus 1 according to figure 2 comprises a probe 2 to generate and receive ultrasonic waves 4, a wedge 3 located between the probe 2 and the component 5 to be inspected, and an evaluation unit, for processing the received ultrasonic waves. A first surface of the wedge 3 is designed to match the shape of the component 5 to be inspected along a scanning path 6 of the component 5 to be inspected. During the inspection of the component 5 the probe 2 produces ultrasonic waves 4 which will be directed into the component 5 via the wedge 3. These ultrasonic waves 4 will be reflected by an opposite surface of the component 5 or at flaws, like cracks, inside the component 5. The reflected ultrasonic waves 4 are received by the probe 2. During the inspection of the component 5 the wedge is stationary, while the probe 2 is moved along a scanning path 6 on a second surface of the wedge 3. The second surface of the wedge 3 is designed in such a way that the ultrasonic waves transmitted into the component 5 cover the whole area of the component 5 which has to be inspected along the scanning path 6. Hence, the shape of the second surface of the wedge 3 is adapted along the scanning path 6 to optimize the angle in which the ultrasonic waves 4 enter the component 5. Preferably, the beam angle of the generated ultrasonic waves 4 are radial to serration grooves of the component 5.

The ultrasonic inspection apparatus 1 according to figure 2 further comprises a guiding device, not shown, like a scanning arm, to move the probe 2 along the scanning path 6 on the second surface of the wedge 3.

The wedge 3 of figure 2 is made from a rubberized compound or a cross-linked polystyrene microwave plastic, like the product "rexolite" sold by the company C-LEC Plastics, Inc.

The ultrasonic waves 4 are transmitted from the wedge 3 to the component 5 by a couplant which is located between the first surface of the wedge 3 and the surface of the component 5.

A display unit, now shown, can be used to visualize the signals indicating the received ultrasonic waves 4.

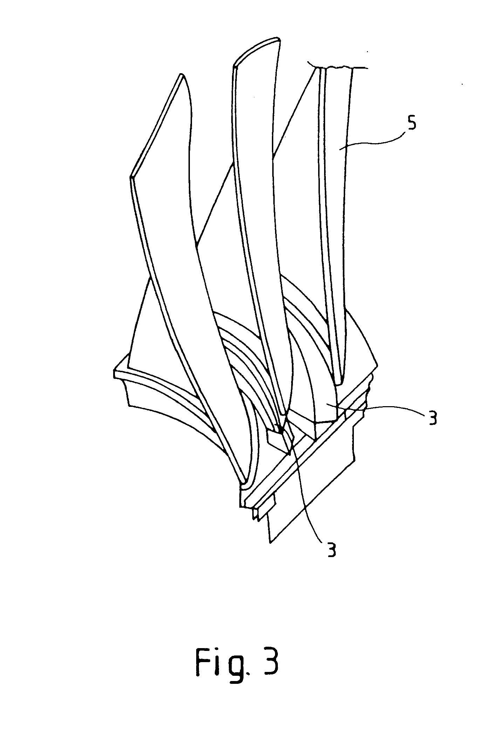

Figure 3 shows a further component 5 to be inspected by an ultrasonic inspection apparatus 1 according to the invention with two wedges 3 attached to the component 5. The wedges 3 are designed in such a way that a first surface of the wedge 3 matches the shape of the component 5 to be inspected along a scanning path 6. By using two wedges 3 different areas of the component 5 could be inspected. The wedges 3 can be inserted between the blades of the components 5 even in case the component 5 is mounted inside a turbine.

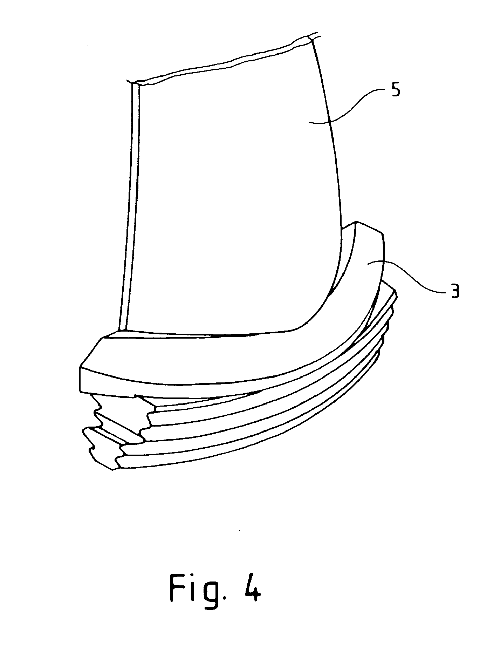

Figure 4 shows a detailed view of figure 3 including a part of the component 5 to be inspected, and a wedge 3 according to the invention. The wedge 3 is located between a probe 2 and a component 5 to be inspected during an ultrasonic inspection. A first surface of the wedge 3 is designed to match the shape of the component 5 to be inspected along a scanning path 6. The wedge 3 can be produced by using or producing a CAD model of the component 5 to be inspected. For the production of the wedge 3 a scanning path 6 has to be defined to cover the whole area of the component 5 which has to be inspected. Using the CAD model the first surface of the wedge 3 can be designed to match the shape of the component 5 to be inspected along the scanning path 6.

### Reference symbols:

- 1: Ultrasonic inspection apparatus
- 2: Probe
- 3: Wedge
- 4: Ultrasonic waves
- 5: Components
- 6: Scanning path

## Claims

1. Ultrasonic inspection apparatus (1) for inspection of components (5), like low pressure last stage blades and disc steeple serrations, comprising:
- a probe to generate and receive ultrasonic waves (4),
- a wedge (3) located between the probe (2) and the component (5) to be inspected, and
- an evaluation unit, for processing the received ultrasonic waves (4), **characterized in that**
a first surface of the wedge (3) is designed to match the shape of the component (5) to be inspected along a scanning path (6) of the component (5) to be inspected.

2. Ultrasonic inspection apparatus (1) according to claim 1,
further comprising a guiding device, like a scanning arm, to move the probe (2) along the scanning path (6) on a second surface of the wedge (3).

3. Ultrasonic inspection apparatus (1) according to claim 1 or 2, **characterized in that**
the shape of the second surface of the wedge (3) is adapted along the scanning path (6) to optimize the angle in which the ultrasonic waves (4) enter the component (5).

4. Ultrasonic inspection apparatus (1) according to claim 3,
**characterized in that**
the beam angle of the generated ultrasonic waves (4) are radial to serration grooves of the component (5).

5. Ultrasonic inspection apparatus (1) according to one of claims 1 to 4, **characterized in that**
the wedge (3) is made from a rubberized compound or a cross-linked polystyrene microwave plastic.

6. Ultrasonic inspection apparatus (1) according to one of claims 1 to 5, **characterized in that**
a couplant is located between the first surface of the wedge (3) and the surface of the component (5) to be inspected.

7. Method for inspection of components (5), like low pressure last stage blades and disc steeple serrations, using an ultrasonic inspection apparatus (1) according to one of claims 1 to 6, comprising the steps:
- producing ultrasonic waves (4),
- directing said ultrasonic waves (4) into the component (5) to be inspected,
- receiving reflected ultrasonic waves (4), and
- producing signals indicating the received ultrasonic waves (4), **characterized in that**
the wedge (3) is stationary during the inspection of the component (5), while the probe (2) is moved along a scanning path (6) on the second surface of the wedge (3).

8. Method according to claim 7,
**characterized in that**
a scanning arm is used to move the probe (2) along the scanning path (6).

9. Method according to claim 7 or 8,
**characterized in that**
a display unit is used to visualize the signals indicating the received ultrasonic waves (4).

10. Method for producing a wedge (3) located between a probe (2) and a component (5) to be inspected during an ultrasonic inspection, wherein a first surface of the wedge (3) is designed to match the shape of the component (5) to be inspected along a scanning path (6), comprising the steps:
- producing or using a CAD model of the component (5) to be inspected,
- defining a scanning path (6) to cover the whole area of the component (5) which has to be inspected, and
- designing a wedge (3) with a first surface that matches the shape of the component (5) to be inspected along the scanning path (6).

11. Wedge (3) for ultrasonic inspection of components (5) like low pressure last stage blades and disc steeple serrations, produced according to the method of claim 10.

## Amended claims

### Amended claims in accordance with Rule 137(2) EPC.

**1.** Ultrasonic inspection apparatus (1) for inspection of components (5), like low pressure last stage blades and disc steeple serrations, comprising:
- a probe to generate and receive ultrasonic waves (4),
- a wedge (3) located between the probe (2) and the component (5) to be inspected, and
- an evaluation unit, for processing the received ultrasonic waves (4), **characterized in that**
a first surface of the wedge (3) is designed to match the shape of the component (5) to be inspected along a scanning path (6) of the component (5) to be inspected, wherein the wedge is stationary while the probe is moved along a scanning path (6) on a second surface of the wedge (3) and the second surface of the wedge (3) is designed to transmit ultrasonic waves over the whole area of the component (5) which is to be inspected along the scanning path (6).

**2.** Ultrasonic inspection apparatus (1) according to claim 1,
further comprising a guiding device, like a scanning arm, to move the probe (2) along the scanning path (6) on a second surface of the wedge (3).

**3.** Ultrasonic inspection apparatus (1) according to claim 1 or 2,
**characterized in that**
the shape of the second surface of the wedge (3) is adapted along the scanning path (6) to optimize the angle in which the ultrasonic waves (4) enter the component (5).

**4.** Ultrasonic inspection apparatus (1) according to claim 3,
**characterized in that**
the beam angle of the generated ultrasonic waves (4) are radial to serration grooves of the component (5).

**5.** Ultrasonic inspection apparatus (1) according to one of claims 1 to 4,
**characterized in that**
the wedge (3) is made from a rubberized compound or a cross-linked polystyrene microwave plastic.

**6.** Ultrasonic inspection apparatus (1) according to one of claims 1 to 5,
**characterized in that**
a couplant is located between the first surface of the wedge (3) and the surface of the component (5) to be inspected.

**7.** Method for inspection of components (5), like low pressure last stage blades and disc steeple serrations, using an ultrasonic inspection apparatus (1) according to one of claims 1 to 6, comprising the steps:
- producing ultrasonic waves (4),
- directing said ultrasonic waves (4) into the component (5) to be inspected,
- receiving reflected ultrasonic waves (4), and
- producing signals indicating the received ultrasonic waves (4), **characterized in that**
the wedge (3) is stationary during the inspection of the component (5), while the probe (2) is moved along a scanning path (6) on the second surface of the wedge (3).

**8.** Method according to claim 7,
**characterized in that**
a scanning arm is used to move the probe (2) along the scanning path (6).

**9.** Method according to claim 7 or 8,
**characterized in that**
a display unit is used to visualize the signals indicating the received ultrasonic waves (4).

**10.** Method for producing a wedge (3) located between a probe (2) and a component (5) to be inspected during an ultrasonic inspection, wherein a first surface of the wedge (3) is designed to match the shape of the component (5) to be inspected along a scanning path (6), comprising the steps:
- producing or using a CAD model of the component (5) to be inspected,
- defining a scanning path (6) to cover the whole area of the component (5) which has to be inspected, and
- designing a wedge (3) with a first surface that matches the shape of the component (5) to be inspected along the scanning path (6).

**11.** Wedge (3) for ultrasonic inspection of components (5) like low pressure last stage blades and disc steeple serrations, produced according to the method of claim 10.
